# EUROPÄISCHE PATENTANMELDUNG

(11) **EP 3 900 527 A1**
(43) Veröffentlichungstag der Anmeldung: **27.10.2021**
(21) Anmeldenummer: 21169889.9
(22) Anmeldetag: 22.04.2021
(51) Int. Cl.: A01K 5/02

(54) **VERFAHREN ZUR FÜTTERUNG VON TIEREN UND PNEUMATISCHE FÜTTERUNGSANLAGE**

(30) Priorität: 24.04.2020 AT 503562020
(71) Anmelder: Schauer Agrotronic GmbH, 4731 Prambachkirchen (AT)
(72) Erfinder: SCHÖNBAUER, Hubert, 4722 Peuerbach (AT)
(74) Vertreter: Burger, Hannes

(57) **Zusammenfassung**

Die Erfindung betrifft ein Verfahren zur Fütterung von Tieren mittels einer pneumatischen Fütterungsanlage sowie eine pneumatische Fütterungsanlage zur Dosierung und Verteilung von Tierfutterportionen an mehrere Fressstellen. Die pneumatische Fütterungsanlage umfasst mindestens einen Misch- und/oder Vorratsbehälter, ein mit Druckluft beaufschlagbares Futterleitungssystem, sowie eine zur Steuerung der Dosierung und Förderung der Futterportionen zu den Fressstellen ausgebildete Steuerungsvorrichtung. An wenigstens einer Messtelle im Zuge des Futterleitungssystems ist ein Sensor angeordnet, welcher Sensor messtechnisch zur Detektion von Übergängen von Luft zu einer jeweiligen Futterportion und/oder Übergängen von einer jeweiligen Futterportion zu Luft ausgebildet ist.

## Beschreibung

Die Erfindung betrifft ein Verfahren zur Fütterung von Tieren mittels einer pneumatischen Fütterungsanlage sowie eine Fütterungsanlage zur Zubereitung und pneumatischen Verteilung von Tierfutter.

Bei pneumatischen Tierfütterungs-Verfahren bzw. pneumatischen Fütterungsanlagen der genannten Art wird Druckluft zur Förderung von Tierfutterportionen genutzt. Das Tierfutter kann zum Beispiel in einem Vorratsbehältnis bereitgestellt sein oder kann eine Tierfuttermischung mittels einer Mischvorrichtung, zum Beispiel einem Chargenmischer zubereitet werden. Anschließend wird bei gattungsgemäßen, pneumatischen Fütterungsanlagen bzw. -verfahren eine Tierfuttermischung zeitlich aufeinanderfolgend in Futterportionen portioniert, in ein Futterleitungssystem abgegeben bzw. eingeschleust und mittels der Druckluft jeweils zu Fressstellen für die Tiere gefördert. Gattungsgemäße, pneumatische Fütterungsanlagen und - verfahren sind zum Beispiel aus der EP 2 977 340 A1 oder EP 2 502 489 B1 bekannt.

Derartige, pneumatische Fütterungsanlagen bzw. -verfahren bieten gegenüber alternativen Fütterungsverfahren, wie etwa hydraulischen Fütterungsverfahren und -anlagen einige Vorteile. So können Tierfuttermischungen bei pneumatischer Fütterung relativ einfach jeweils für unterschiedliche Tiere individuell angepasst und portioniert werden. Unter anderem ist eine sogenannte Phasenfütterung, also eine an die Entwicklungsphase eines jeweiligen Tieres angepasste Fütterung ohne Weiteres möglich. Weiters können mittels pneumatischen Fütterungsanlagen Futterportionen unterschiedlichster Konsistenz von flüssig über angefeuchtet bis trocken verabreicht werden. Ganz allgemein sind pneumatisch Fütterungsanlagen sehr flexibel betreibbar, sodass zum Beispiel auch etwaige Schwankungen in Futtermittelpreisen hinsichtlich einer möglichst ökonomischen Tierfütterung berücksichtigt werden können. Außerdem tritt bei pneumatischen Fütterungsanlagen eine vergleichsweise geringe mechanische Belastung der Futterförderwege auf.

Aufgrund der genannten und weiteren Vorteile sind pneumatische Fütterungsanlagen in der Tierhaltung verstärkt gefragt und kommen in immer höher werdender Anzahl zum Einsatz.

Auch deshalb ist ein möglichst effizienter und damit ökonomischer Betrieb solcher Fütterungsanlagen wünschenswert. Es besteht vor allem in dieser Hinsicht weiter Verbesserungsbedarf in Zusammenhang mit pneumatischen Fütterungsanlagen.

Aufgabe der Erfindung war es daher, ein Verfahren zur Fütterung von Tieren mittels einer pneumatischen Fütterungsanlage bereitzustellen, welches eine hinsichtlich Effizienz und Flexibilität im Vergleich zum Stand der Technik verbesserte Tierfütterung ermöglicht. Des Weiteren war es Aufgabe der Erfindung, eine möglichst effiziente und flexibel einsetzbare, pneumatische Fütterungsanlage bereitzustellen.

Diese Aufgabe wird durch ein Verfahren und eine Vorrichtung gemäß den Ansprüchen gelöst.

Das Verfahren zur Fütterung von Tieren mittels einer pneumatischen Fütterungsanlage umfasst die Schritte
- Zuführung von Futterportionen aus mindestens einem Misch- und/oder Vorratsbehälter in eine Futterhauptleitung eines Futterleitungssystem mittels einer Dosiervorrichtung,
- pneumatische Förderung der Futterportionen in dem Futterleitungssystem zu Futter- bzw. Fressstellen durch mittels einer Drucklufterzeugungsvorrichtung erzeugte Druckluft, wobei die einzelnen Futterportionen mittels zumindest einem Verteilungsmittel jeweils in Fressstellenzuleitungen geleitet werden, welches zumindest eine Verteilungsmittel mit der Futterhauptleitung oder mit einer optionalen, weiteren mit der Futterhauptleitung verbundenen Futterleitung, verbunden ist, und wobei die Fressstellenzuleitungen jeweils in eine Fressstelle münden und die Futterportionen an eine jeweilige Fressstelle abgegeben werden,,
- und Steuerung der Dosierung und Förderung der Futterportionen zu den Fressstellen mittels einer Steuerungsvorrichtung.

Im Besonderen ist vorgesehen, dass an wenigstens einer Messstelle im Zuge bzw. entlang des Futterleitungssystems mittels wenigstens eines mit der Steuerungsvorrichtung signalverbundenen Sensors Übergänge von Luft zu einer jeweiligen Futterportion und/oder Übergänge von einer jeweiligen Futterportion zu Luft an der wenigstens einen Messtelle in dem Futterleitungssystem detektiert werden.

Durch diese Detektion von Übergängen von Luft zu einer jeweiligen Futterportion und/oder von einer jeweiligen Futterportion zu Luft mittels des wenigstens eines Sensors im Futterleitungssystem kann vor allem der Zeitpunkt, zu welchem eine jeweilige Futterportion den oder die Sensor(en) passiert bzw. passiert hat, festgestellt werden. Auf diese Weise können insbesondere für die Steuerungsvorrichtung sensorisch erfasste Bezugspunkte bereitgestellt werden, und basierend auf diesen Bezugspunkten die Steuerung der pneumatischen Fütterungsanlage, im Speziellen die zeitlichen Abläufe der Fütterungsanlage mit verbesserter Effizienz vorgenommen werden. Die Detektion der Übergänge von Luft zu einer Futterportion bzw. von einer Futterportion zu Luft liefert für diese steuerungstechnischen Abläufe des Verfahrens hierbei ausreichend genaue Bezugspunkte, bzw. können die steuerungstechnischen Abläufe mit hinreichender Genauigkeit ausgeführt werden.

Von Vorteil gegenüber vorbekannten, pneumatischen Fütterungsverfahren ist beispielsweise, dass Blaszeiten zur Förderung der Futterportionen in dem Futterleitungssystem auf Basis der detektierten Übergänge automatisch gesteuert werden können. Reserven bzw. Reserveblaszeiten, welche bei vorbekannten, pneumatischen Verfahren nötig waren um eine vollständige Ausgabe der Futterportionen zu gewährleisten, können zumindest weitestgehend minimiert oder sogar erübrigt werden. Durch die angegeben Maßnahmen kann in weiterer Folge insbesondere die Fütterungsgeschwindigkeit gesteigert, und damit die Effizienz des Verfahrens verbessert werden.

Gleichzeitig ist in diesem Zusammenhang aber auch eine Verbesserung der Flexibilität des Verfahrens erzielbar. Insbesondere können Tierfuttermischungen, welche stark unterschiedliche Fördereigenschaften haben, bzw. aufgrund unterschiedlicher Zusammensetzung und damit unterschiedlicher Dichte und/oder Konsistenz verschiedene Förderzeiten erfordern, dennoch direkt aufeinanderfolgend zur Fütterung der Tiere verwendet bzw. durch das Futterleitungssystem gefördert werden, ohne dass hier spezielle Anpassungen nötig wären. Durch die sensorische Detektion der Übergänge von Luft zu Futterportionen bzw. umgekehrt, kann automatisch die zur vollständigen Abgabe an Futterstellen erforderliche Zeit ermittelt, und die Blaszeiten entsprechend angepasst werden.

Weiters kann aufgrund der ermöglichten Minimierung der Blaszeiten auch der Verschleiß von Anlagenkomponenten weiter gesenkt werden, da das den Verschleiß verursachende Beaufschlagen des Futterleitungssystems mit Druckluft zeitlich minimiert werden kann.

Die Zuführung der Futterportionen aus dem Misch- und/oder Vorratsbehälter in die zumindest eine Futterhauptleitung kann bei dem pneumatisch betriebenen Verfahren zur Tierfütterung zeitlich aufeinanderfolgend erfolgen, so dass die einzelnen jeweils für eine Futterstelle vorgesehenen Futterportionen zeitlich aufeinanderfolgend in dem Futterleitungssystem gefördert werden. Im Besonderen kann vorgesehen sein, dass sich jeweils bis zur abschließenden, vollständigen Abgabe einer Futterportion, jeweils nur diese Futterportion in dem Futterleitungssystem befindet. Je nach Ausgestaltung einer spezifischen Fütterungsanlage können im Futterleitungssystem aber durchaus auch mehrere Futterportionen gleichzeitig gefördert werden, wobei die Zuführung der jeweiligen Futterportionen in das Futterleitungssystem wiederum zeitlich aufeinanderfolgend durchgeführt werden kann.

Zur Bereitstellung des Tierfutters kann ein einfacher Vorratsbehälter oder mehrere Vorratsbehälter, welche(r) mit Tierfuttermischungen befüllbar ist bzw. sind, vorgesehen sein. Andererseits kann auch ein Vorratsbehälter vorgesehen sein, welcher aus einem separaten Mischbehälter, in welchem eine Tierfuttermischung zubereitet wird, mit frisch bereiteter Tierfuttermischung beaufschlagt wird. Je nach Anlagen- bzw. Tierstallgröße können hierzu natürlich auch mehrere Vorrats- und Mischbehälter vorgesehen sein. Je nach Ausführungsart kann eine Tierfuttermischung bzw. können Tierfuttermischungen aber natürlich auch aus einem oder mehreren Mischbehälter(n), welche(r) gleichzeitig als Vorratsbehälter dient bzw. dienen, direkt ohne zwischengeschaltete Vorratsbehälter in das Futterleitungssystem eingeschleust werden.

Zur Portionierung und Einschleusung von Tierfutterportionen aus einem Misch- und/oder Vorratsbehälter ist eine Dosiervorrichtung vorzusehen. Eine solche Dosiervorrichtung kann grundsätzlich durch jedwede, geeignete Futterschleuse gebildet sein. So kommen zum Beispiel Kammerschleusen, Zellenradschleusen aber auch einfache, insbesondere angetriebene Auf/Zu-Klappen als Dosiervorrichtung in Betracht. Die Auswahl der Art einer Dosiervorrichtung bzw. Futterschleuse kann hierbei ganz generell nach der Art der Futtermischung(en), welche in dem zugehörigen Misch- und/oder Vorratsbehälter bereitet oder zwischengelagert wird bzw. werden, erfolgen.

Zur Erzeugung der Druckluft, mittels welcher die Tierfutterportionen in dem Futterleitungssystem gefördert werden, kann in an sich bekannter Weise zum Beispiel ein Kompressor oder Gebläse vorgesehen sein.

Als Verteilungsmittel können wie ebenfalls an sich bekannt jedwede Vorrichtungen, mittels welchen ein Umschalten auf die einzelnen Futter- bzw. Fressstellenzuleitungen bewerkstelligt werden kann, verwendet werden. Hierzu können beispielsweise geeignete Ventil- bzw. Verteilvorrichtungen eingesetzt werden, sogenannte Rotationsverteiler haben sich in der Praxis besonders bewährt.

Die Detektion der Übergänge von Luft zu einer jeweiligen Futterportionen bzw. von einer jeweiligen Futterportion zu Luft kann im Grunde genommen an einer oder mehreren, beliebigen Messstelle(n) im Zuge bzw. entlang des Futterleitungssystems vorgenommen werden. Grundsätzlich kann hierzu ein einzelner im Zuge der Futterhauptleitung angeordneter Sensor ausreichend sein. Dies da eine Berechnung der (Rest-)Laufzeit einer Futterportion in dem Futterleitungssystem, zum Beispiel bis zur vollständigen Abgabe an eine Fressstelle, auf Basis eines detektierten Übergangs mittels weiterer bekannter Parameter, wie den bekannten Leitungsquerschnitten des Futterleitungssystems und den bekannten Luftdrücken im Futterleitungssystem, mit hinreichender Genauigkeit erfolgen kann. Entsprechende Berechnungsalgorithmen können hierbei zur automatischen Steuerung der pneumatischen Fütterungsanlage in der Steuerungsvorrichtung abgebildet sein.

Ganz generell können Übergänge von Luft zu einer jeweiligen Futterportionen bzw. von einer Futterportion zu Luft natürlich aber auch an mehreren Messtellen im Zuge des Futterleitungssystems mittels mehrerer Sensoren detektiert werden. Hierdurch kann insbesondere bei großen Fütterungsanlagen mit weitläufigen und/oder komplex verzweigten Futterleitungssystemen gegebenenfalls die Detektionsgenauigkeit und in weiterer Folge die Effizienz des Betriebs einer Fütterungsanlage weiter verbessert werden. Bestimmte Anordnungsvarianten von Messstelle(n) bzw. Sensor(en) haben sich bei dem Verfahren jedoch als besonders vorteilhaft erwiesen.

Bei einer Ausführungsform des Verfahrens kann zum Beispiel vorgesehen sein, dass die Übergänge von Luft zu einer jeweiligen Futterportion und/oder die Übergänge von einer jeweiligen Futterportion zu Luft mittels wenigstens eines an wenigstens einer Messstelle im Zuge der Futterhauptleitung oder einer Futterleitung vor dem zumindest einen Verteilungsmittel angeordneten Sensors detektiert wird. Ein Sensor kann hierbei örtlich an einer möglichst nahe dem Verteilungsmittel liegenden Messstelle im Zuge der Futterhauptleitung oder im Zuge einer Futterleitung angeordnet sein.

Hierdurch können im Speziellen mittels nur einem Sensor zeitlich versetzt die Futterportionen bzw. allenfalls alle Futterportionen an einer Messtelle detektiert, und damit jeweils örtlich gleichbleibende Zeit-Bezugspunkte für die Steuerung der pneumatischen Fütterungsanlage erhalten werden. Auf diese Weise können auch schwankende Parameter, zum Beispiel aufgrund von Futterportionen mit unterschiedlicher Konsistenz, erfasst und die Steuerung der Fütterungsanlage entsprechend angepasst werden.

Je nach Art und Ausgestaltung einer pneumatischen Fütterungsanlage kann alternativ oder zusätzlich aber auch eine Verfahrensführung sinnvoll sein, bei welcher die Übergänge von Luft zu einer jeweiligen Futterportion und/oder die Übergänge von einer jeweiligen Futterportion zu Luft mittels mehrerer an mehreren Messstellen im Zuge bzw. entlang mehrerer Fressstellenzuleitungen vor mehreren Fressstellen angeordneten Sensoren detektiert werden.

Mittels dieser Maßnahme kann gegebenenfalls die Messgenauigkeit der Bestimmung der Übergänge von Luft zu einer jeweiligen Futterportion bzw. von einer jeweiligen Futterportion zu Luft gesteigert werden. Im Besonderen kann durch eine solche Verfahrensführung die Steuerung von Fütterungsabläufen, welche (zeitlich) speziell mit der Abgabe von Futterportionen an eine jeweilige Fressstelle in Zusammenhang stehen, mit erhöhter Genauigkeit durchgeführt werden. Grundsätzlich kann bei einer Verfahrensführung mit Detektion der Übergänge in den Fressstellenzuleitungen eine Anordnung eines Sensors oder von Sensoren entlang bzw. im Zuge eine Futterhauptleitung oder einer Futterleitung erübrigt werden. Je nach Anforderung und gewünschter Detektionsgenauigkeit kann aber durchaus auch eine Detektion der Übergänge in einer Futterhauptleitung oder einer damit verbundenen Futterleitung vor einem Verteilungsmittel zusätzlich zur Detektion in den Fressstellenzuleitungen nach einem Verteilungsmittel erfolgen.

Im Wesentlichen unabhängig von der Anzahl der im Zuge des Futterleitungssystems angeordneten Messstellen bzw. Sensoren, können durch Detektion der Übergänge von Luft zu einer jeweiligen Futterportion bzw. von einer jeweiligen Futterportion zu Luft, mit der automatischen Tierfütterung in Zusammenhang stehende Fütterungsabläufe verbessert gesteuert, insbesondere zeitlich verbessert gesteuert werden.

So kann bei einer Verfahrensführung zur Fütterung von Tieren beispielsweise vorgesehen sein, dass auf Basis eines detektierten Übergangs von Luft zu einer Futterportion der Futterportion zeitlich gesteuert mittels einer Wasserzugabe-Vorrichtung Wasser beigemengt wird.

Durch eine solche basierend auf den detektierten Übergängen erfolgende Wasserzugabe zu den Futterportionen, kann eine möglichst vollständige und homogene Anfeuchtung einer Futterportion erzielt werden, da die Zugabe von Wasser zeitlich rechtzeitig am Beginn einer Futterportion zugeschaltet werden kann.

Weiters kann vorgesehen sein, dass auf Basis eines detektierten Übergangs von der Futterportion zu Luft die Zugabe von Wasser zu dieser Futterportion zeitlich gesteuert gestoppt wird.

Durch diese Maßnahme kann die Wasserzugabe zeitlich sehr genau nach Durchgang einer Futterportion wieder gestoppt werden, wodurch sich Vorteile sowohl hinsichtlich des Wasserverbrauchs aber auch hinsichtlich unerwünschter und überflüssiger Wasserreste im Futterleitungssystem ergeben.

Die Zugabe von Wasser kann auf Basis der detektierten Übergänge automatisiert gesteuert mittels der Steuerungsvorrichtung durchgeführt werden. Grundsätzlich kann die Wasserzugabe an jedweder Stelle im Zuge des Futterleitungssystems vorgenommen werden, beispielsweise kann eine Wasserzugabe im Zuge der Futterhauptleitung oder einer Futterleitung vor einem Verteilungsmittel und/oder im Zuge von Fressstellenzuleitungen erfolgen.

Bei einer weiteren Verfahrensführung kann vorgesehen sein, dass auf Basis eines detektierten Übergangs von einer Futterportion zu Luft Fressstellenzuleitungen zeitlich gesteuert gereinigt werden.

Auch diese Maßnahme wirkt sich vorteilhaft auf das Verfahren aus, da etwa unnötige Reinigungsvorgänge oder Reinigungen zu einem falschen Zeitpunkt vermieden werden können. Eine Reinigung von Fressstellenzuleitungen kann insbesondere automatisiert gesteuert möglichst zeitnah nach einem Durchtritt einer Futterportion erfolgen, und kann hierdurch zum Beispiel eine Bildung von schwer zu entfernenden Futterresten in einer Fressstellenzuleitung hintangehalten werden. Zum Beispiel kann eine Reinigung von Fressstellenzuleitungen mittels im Bereich der Fressstellenzuleitungen angeordneten Ablaufreinigungsvorrichtungen durchgeführt werden. Alternativ kann eine Reinigung von Fressstellenzuleitungen, oder auch insgesamt Teilbereichen des Futterleitungssystems auf Basis von detektierten Übergängen von Futterportionen zu Luft mittels für die Zugabe von Wasser zu Futterportionen vorgesehenen Wasserzugabe-Vorrichtungen durchgeführt werden.

Außerdem kann bei dem Verfahren grundsätzlich vorgesehen sein, dass auf Basis eines detektierten Übergangs von der Futterportion zu Luft zeitlich gesteuert das Futterleitungssystems mit einer neuen für eine weitere Fressstelle vorgesehenen Futterportion beaufschlagt wird.

Durch die Detektion der Übergänge kann im Speziellen der zeitliche Versatz der Einbringung von Futterportionen in das Futterleitungssystems sehr effizient vorgenommen werden. Totzeiten aufgrund von ansonsten vorzusehenden Sicherheitstoleranzen bzw. ansonsten vorzugebenden Reserve-Zeitintervallen für eine jeweils gesichert vollständige Abgabe einer Futterportion an eine Fressstelle, können durch die angegebenen Maßnahmen vermieden bzw. zumindest möglichst geringgehalten werden. Im Besonderen kann vorgesehen sein, dass basierend auf den Übergängen von einer Futterportion zu Luft unmittelbar nach einer vollständigen Abgabe einer Futterportion eine weitere Futterportion in das Futterleitungssystem eingeschleust wird. Je nach Ausgestaltung einer Fütterungsanlage ist es alternativ aber durchaus auch möglich, dass weitere Futterportionen jeweils zeitlich versetzt bzw. aufeinanderfolgend bereits dann in das Futterleitungssystem eingeschleust werden, wenn sich eine oder mehrere Futterportionen gleichzeitig noch in dem Futterleitungssystem befinden bzw. darin noch zu Fressstellen befördert werden. Zum Beispiel kann vorgesehen sein, dass nach Detektion eines Übergangs von einer Futterportion zu Luft an einer bestimmten Messstelle eine weitere Futterportion, gegebenenfalls nach Ablauf eines vorgebbaren Reservezeitintervalls, in das Futterleitungssystem eingeschleust wird, bevor die detektierte Futterportion an der zugehörigen Fressstelle abgegeben ist.

Im Besonderen kann vorgesehen sein, dass nach einer erfolgten Einschleusung einer Futterportion das Futterleitungssystem nach Ablauf eines vorgebbaren Zeitintervalls mit einer neuen für eine weitere Fressstelle vorgesehenen Futterportion beaufschlagt wird, und dass auf Basis eines detektierten Übergangs von der Futterportion zu Luft zeitlich gesteuert ein Verteilungsmittel auf diese weitere Fressstelle umgeschaltet wird.

Die Aufgabe der Erfindung wird aber auch durch eine pneumatische Fütterungsanlage gelöst. Die pneumatische Fütterungsanlage ist zur Dosierung und Verteilung von Tierfutterportionen an mehrere Futter- bzw. Fressstellen vorgesehen, und kann insbesondere zur Ausführung des oben beschriebenen Verfahrens vorgesehen sein. Die pneumatische Fütterungsanlage kann im Speziellen zur automatisierten, zeitlich aufeinanderfolgenden Dosierung und Verteilung von Tierfutterportionen an mehrere Futter- bzw. Fressstellen ausgestaltet sein.

Hierzu umfasst die pneumatische Fütterungsanlage mindestens einen Misch- und/oder Vorratsbehälter und eine Dosiervorrichtung zur Bereitstellung von Futterportionen. Weiters umfasst die pneumatische Fütterungsanlage ein Futterleitungssystem zum Zuleiten der Futterportionen von der Dosiervorrichtung zu den Futter- bzw. Fressstellen, welches Futterleitungssystem zumindest eine mit der Dosiervorrichtung verbundene Futterhauptleitung und optional weitere mit der Futterhauptleitung verbundene Futterleitungen umfasst, und welches Futterleitungssystem mehrere über zumindest ein Verteilungsmittel mit der Futterhauptleitung oder mit einer der weiteren Futterleitungen verbundene und jeweils in eine der Fressstellen mündende Fressstellenzuleitungen umfasst. Außerdem umfasst die pneumatische Fütterungsanlage eine mit der Futterhauptleitung verbundene Drucklufterzeugungsvorrichtung zur pneumatischen Förderung der Futterportionen via das Futterleitungssystem, also die Futterhauptleitung, optional die weiteren Futterleitungen und schließlich die Fressstellenzuleitungen, zu den Fressstellen, sowie eine zur Steuerung der Dosierung und Förderung der Futterportionen zu den Fressstellen ausgebildete Steuerungsvorrichtung.

Es ist wenigstens ein mit der Steuerungsvorrichtung signalverbundener Sensor an wenigstens einer Messtelle im Zuge des Futterleitungssystems angeordnet, welcher wenigstens eine Sensor messtechnisch zur Detektion von Übergängen von Luft zu einer jeweiligen Futterportion und/oder Übergängen von einer jeweiligen Futterportion zu Luft an der wenigstens einen Messtelle in dem Futterleitungssystem ausgebildet ist.

Durch diese Ausgestaltung einer pneumatischen Fütterungsanlage können für den Betrieb der Anlage zahlreiche Vorteile erzielt werden. Im Speziellen können für die Steuerungsvorrichtung sensorisch erfassbare Bezugspunkte bereitgestellt werden, basierend auf welchen Bezugspunkten die Steuerung der pneumatischen Fütterungsanlage, im Speziellen die zeitlichen Abläufe der Fütterungsanlage mit verbesserter Effizienz durch die entsprechend ausgebildete Steuerungsvorrichtung vorgenommen werden können. Die Sensoren zur Detektion der Übergänge von Luft zu einer Futterportion bzw. von einer Futterportion zu Luft liefern für den Betrieb der pneumatischen Fütterungsanlage hierbei ausreichend genaue Bezugspunkte, bzw. können die steuerungstechnischen Abläufe mit hinreichender Genauigkeit durch die Steuerungsvorrichtung ausgeführt werden.

Gegenüber vorbekannten, pneumatischen Fütterungsanlagen ist weiters vorteilhaft, dass im Betrieb Blaszeiten zur Förderung der Futterportionen in dem Futterleitungssystem auf Basis der detektierten Übergänge automatisch gesteuert werden können. Reserven bzw. Reserveblaszeiten, welche bei vorbekannten, pneumatischen Fütterungsanlagen eingestellt bzw. vorgesehen werden mussten um eine vollständige Ausgabe der Futterportionen jedenfalls zu gewährleisten, können zumindest weitestgehend minimiert oder sogar erübrigt werden. Durch die angegeben Merkmale kann insbesondere die Fütterungsgeschwindigkeit gesteigert, und damit die Effizienz Fütterungsanlage im Betrieb verbessert werden.

Gleichzeitig ist in diesem Zusammenhang die pneumatische Fütterungsanlage aber auch flexibler betreibbar. Insbesondere können im Betrieb Tierfuttermischungen, welche stark unterschiedliche Fördereigenschaften haben, bzw. aufgrund unterschiedlicher Zusammensetzung und damit unterschiedlicher Dichte und/oder Konsistenz verschiedene Förderzeiten erfordern, dennoch direkt aufeinanderfolgend zur Fütterung der Tiere verwendet bzw. durch das Futterleitungssystem gefördert werden. Durch die sensorische Detektion der Übergänge von Luft zu Futterportionen bzw. umgekehrt, kann automatisch die zur vollständigen Abgabe an Futterstellen erforderliche Zeit ermittelt, und die Blaszeiten entsprechend angepasst bzw. durch die Steuerungsvorrichtung gesteuert werden.

Weiters kann aufgrund der ermöglichten Minimierung der Blaszeiten im Betrieb der pneumatischen Fütterungsanlage auch der Verschleiß von Anlagenkomponenten weiter gesenkt werden, da das den Verschleiß verursachende Beaufschlagen des Futterleitungssystems mit Druckluft zeitlich minimiert werden kann.

Zur Bereitstellung des Tierfutters kann ein einfacher Vorratsbehälter zur Aufnahme einer Vorratsmenge des Tierfutters vorgesehen sein. Es kann aber auch ein mit einem separaten Mischbehälter, in welchem eine Tierfuttermischung jeweils frisch zubereitet werden kann, verbundener Vorratsbehälter vorgesehen sein. Je nach Ausführungsform kann aber natürlich auch ein Mischbehälter via die Dosiervorrichtung direkt mit dem Futterleitungssystem verbunden sein. Je nach Anlagengröße und/oder -komplexität und je nach weiteren Anforderungen, wie etwa die Anzahl an unterschiedlichen, zu verteilenden Futtermischungen, kann ein Misch- und/oder Vorratsbehälter ausreichend sein, es können aber selbstverständlich auch mehrere Misch- und/oder Vorratsbehälter vorgesehen sein.

Die Dosiervorrichtung zum Portionieren und Einschleusen der Futterportionen in das Futterleitungssystem kann durch jedwede, geeignete Futterschleuse gebildet sein. So können zum

Beispiel Kammerschleusen, Zellenradschleusen aber auch einfache, insbesondere angetriebene Auf/Zu-Klappen als Dosiervorrichtung gewählt werden. Die Auswahl der Art einer Dosiervorrichtung bzw. Futterschleuse kann hierbei ganz generell nach der Art der Futtermischung(en), welche in dem zugehörigen Misch- und/oder Vorratsbehälter bereitet oder zwischengelagert wird bzw. werden, erfolgen.

Die Drucklufterzeugungsvorrichtung kann beispielsweise durch einen Kompressor oder ein Gebläse gebildet sein.

Das oder die Verteilungsmittel kann bzw. können durch jedwede Vorrichtungen, mittels welchen ein Umschalten auf die einzelnen Futter- bzw. Fressstellenzuleitungen bewerkstelligt werden kann, gebildet sein. Geeignet sind zum Beispiel Ventil- bzw. Verteilvorrichtungen, wobei sich sogenannte Rotationsverteiler sich in der Praxis besonders bewährt haben.

Der wenigstens eine Sensor zur Detektion der Übergänge von Luft zu einer Futterportion oder von einer Futterportion zu Luft kann im Grunde genommen an einer beliebigen Messstelle im Zuge bzw. entlang des Futterleitungssystems angeordnet sein. Grundsätzlich kann ein einzelner im Zuge der Futterhauptleitung angeordneter Sensor ausreichend sein. Dies da eine Berechnung der (Rest-)Laufzeit einer Futterportion in dem Futterleitungssystem, zum Beispiel bis zur vollständigen Abgabe an eine Fressstelle, auf Basis eines detektierten Übergangs mittels weiterer bekannter Parameter, wie den bekannten Leitungsquerschnitten des Futterleitungssystems und den bekannten Luftdrücken im Futterleitungssystem, mit hinreichender Genauigkeit erfolgen kann. Entsprechende Berechnungsalgorithmen können hierbei zur automatischen Steuerung der pneumatischen Fütterungsanlage in der Steuerungsvorrichtung abgebildet sein.

Ganz generell können natürlich aber auch an mehreren Messtellen im Zuge des Futterleitungssystems mehrere Sensoren angeordnet sein. Hierdurch kann insbesondere bei großen Fütterungsanlagen mit weitläufigen und/oder komplex verzweigten Futterleitungssystemen gegebenenfalls die Detektionsgenauigkeit und in weiterer Folge die Effizienz des Betriebs einer Fütterungsanlage weiter verbessert werden. Bestimmte Anordnungsvarianten von Messstelle(n) bzw. Sensor(en) haben sich bei dem Verfahren jedoch als besonders vorteilhaft erwiesen.

So kann bei einer Weitebildung der pneumatischen Fütterungsanlage vorgesehen sein, dass der wenigstens eine Sensor an wenigstens einer Messstelle im Zuge der Futterhauptleitung oder einer Futterleitung vor dem zumindest einen Verteilungsmittel angeordnet ist. Ein Sensor kann hierbei örtlich an einer möglichst nahe dem Verteilungsmittel liegenden Messstelle im Zuge der Futterhauptleitung oder einer Futterleitung angeordnet sein.

Im Betrieb der pneumatischen Fütterungsanlage können durch diese Merkmale die Futterportionen bzw. allenfalls alle Futterportionen an einer Messtelle detektiert, und damit jeweils örtlich festgelegte Zeit-Bezugspunkte für die Steuerungsvorrichtung bereitgestellt werden. Auf diese Weise können auch schwankende Parameter, zum Beispiel aufgrund von Futterportionen mit unterschiedlicher Konsistenz, erfasst und durch die Steuerungsvorrichtung der Fütterungsanlage entsprechend angepasst werden.

Bei einer weiteren Ausgestaltungsvariante der pneumatischen Fütterungsanlage können aber auch mehrere Sensoren an mehreren Messstellen im Zuge bzw. entlang mehrerer Fressstellenzuleitungen vor mehreren Fressstellen angeordnet sein.

Im Betrieb der Fütterungsanlage kann hierdurch gegebenenfalls die Messgenauigkeit der Bestimmung der Übergänge von Luft zu einer jeweiligen Futterportion bzw. von einer jeweiligen Futterportion zu Luft gesteigert werden. Im Besonderen kann durch eine solche Verfahrensführung die Steuerung von Fütterungsabläufen, welche (zeitlich) speziell mit der Abgabe von Futterportionen an eine jeweilige Fressstelle in Zusammenhang stehen, mit erhöhter Genauigkeit durchgeführt werden. Solche im Zuge von Fressstellenzuleitungen angeordnete Sensoren können anstelle eines oder mehrerer Sensoren im Zuge der Futterhauptleitung oder im Zuge einer Futterleitung vorgesehen sein, es kann jedoch auch zusätzlich wenigstens ein Sensor im Zuge bzw. entlang der Futterhauptleitung und/oder im Zuge einer Futterleitung angeordnet sein.

Der wenigstens eine Sensor zur Detektion der Übergänge von Luft zu einer jeweiligen Futterportion bzw. von einer Futterportion zu Luft kann im Prinzip durch jedweden zur Detektion dieser Übergänge geeigneten Sensor gebildet sein. Zum Beispiel ist durchaus ein mechanisch arbeitender Sensor mit einem im Inneren einer Futterhauptleitung und/oder Futterleitungen und/oder Fressstellenzuleitung angeordneten, durch eine Futterportion verstellbaren Messfortsatz denkbar, welcher Sensor eine Verstellung eines solchen Messfortsatzes in ein elektronisches Signal wandelt und selbiges an die Steuerungsvorrichtung übermittelt.

Vorzugsweise kann der wenigstens eine Sensor aber durch eine optische Detektionsvorrichtung gebildet sein. Bei einer besonders bevorzugten Weiterbildung kann der wenigstens eine Sensor insbesondere durch eine Lichtschrankensensorvorrichtung gebildet sein.

Von Vorteil ist hier im Speziellen eine verbesserte Detektionsgenauigkeit im Betrieb der Fütterungsanlage sowie die höhere Lebensdauer bzw. geringeren Wartungsintervalle für derartige Sensoren.

Des Weiteren kann eine pneumatische Fütterungsanlage derart ausgestaltet sein, dass im Zuge des Futterleitungssystems mindestens eine Wasserzugabe-Vorrichtung angeordnet ist, und dass die Steuerungsvorrichtung auf Basis eines detektierten Übergangs von Luft zu einer Futterportion zur zeitlich gesteuerten Zugabe von Wasser zu dieser Futterportion mittels der mindestens einen Wasserzugabe-Vorrichtung ausgebildet ist.

Im Betrieb der Fütterungsanlage kann durch eine solche basierend auf den detektierten Übergängen erfolgende Wasserzugabe zu den Futterportionen eine möglichst gute und homogene Durchfeuchtung der Futterportionen mit der jeweils gewünschten Wassermenge erzielt werden.

Es kann in weiterer Folge aber auch eine Ausgestaltungsvariante vorteilhaft sein, bei welcher die Steuerungsvorrichtung auf Basis eines detektierten Übergangs von der Futterportion zu Luft zum zeitlich gesteuerten Stoppen der Zugabe von Wasser zu dieser Futterportion ausgebildet ist.

Durch diese Maßnahme kann die Wasserzugabe im Betrieb der Fütterungsanlage zeitlich sehr genau nach Durchgang einer Futterportion wieder gestoppt werden, wodurch sich Vorteile sowohl hinsichtlich des Wasserverbrauchs aber auch hinsichtlich unerwünschter und überflüssiger Wasserreste im Futterleitungssystem ergeben.

Die Zugabe von Wasser kann auf Basis der detektierten Übergänge automatisiert gesteuert mittels der Steuerungsvorrichtung durchgeführt werden. Grundsätzlich kann eine Wasserzugabe-Vorrichtung an jedweder Stelle im Zuge des Futterleitungssystems angeordnet sein, beispielsweise kann eine Wasserzugabe-Vorrichtung im Zuge der Futterhauptleitung oder im Zuge von Futterleitungen vor einem Verteilungsmittel und/oder im Zuge von Fressstellenzuleitungen angeordnet sein. Eine solch Wasserzugabe-Vorrichtung kann zum Beispiel durch eine Frischwasserzuleitung mit einem ansteuerbaren Auf/Zu-Ventil oder einer ansteuerbaren Pumpe gebildet sein, oder durch eine Zuleitung aus einem Wasserreservoir mit ansteuerbarem Ventil oder ansteuerbarer Pumpe gebildet sein.

Außerdem kann bei einer Weiterbildung der pneumatischen Fütterungsanlage vorgesehen sein, dass die Steuerungsvorrichtung auf Basis eines detektierten Übergangs von einer Futterportion zu Luft zur zeitlich gesteuerten Reinigung von Fressstellenzuleitungen ausgebildet ist.

Durch diese Merkmale kann im Betrieb der Fütterungsanlage eine Reinigung einer Fressstellenzuleitung jeweils zum optimalen Zeitpunkt, nämlich unmittelbar nach Durchtritt einer Futterportion durchgeführt werden. So können etwa unnötige Reinigungsvorgänge oder Reinigungen zu einem falschen Zeitpunkt vermieden werden können. Weiters kann zum Beispiel eine Bildung von schwer zu entfernenden Futterresten in einer Fressstellenzuleitung hintangehalten werden. Zum Zweck der Reinigung von Fressstellenzuleitungen kann zum Beispiel eine im Bereich der Fressstellenzuleitungen angeordnete Ablaufreinigungsvorrichtung vorgesehen sein. Eine solche Ablaufreinigungsvorrichtung kann durch jedwede zur Entfernung von Tierfutterresten bzw. Verunreinigungen geeignete, ansteuerbare Reinigungsvorrichtung gebildet sein, wie etwa durch eine Druckluft-, Spül-, Wasserstrahlvorrichtung und dergleichen. Alternativ kann die Steuerungsvorrichtung aber auch auf Basis von detektierten Übergängen von Futterportionen zu Luft zur zeitlich gesteuerten Reinigung von Fressstellenzuleitungen, oder auch zur Reinigung von Teilbereichen des Futterleitungssystems mittels für die Zugabe von Wasser zu Futterportionen vorgesehenen Wasserzugabe-Vorrichtungen ausgebildet sein.

Bei einer weiteren, bevorzugten Ausgestaltungsform der pneumatischen Fütterungsanlage kann die Steuerungsvorrichtung auf Basis eines detektierten Übergangs von der Futterportion zu Luft zur zeitlich gesteuerten Beaufschlagung des Futterleitungssystems mit einer neuen für eine weitere Fressstelle vorgesehenen Futterportion ausgebildet sein.

Durch die Detektion der Übergänge im Betrieb der Fütterungsanlage kann im Speziellen der zeitliche Versatz der Einbringung von Futterportionen in das Futterleitungssystems sehr effizient vorgenommen werden. Totzeiten aufgrund von ansonsten vorzusehenden Sicherheitstoleranzen bzw. ansonsten vorzugebenden Reserve-Zeitintervallen für eine jeweils gesichert vollständige Abgabe einer Futterportion an eine Fressstelle, können durch die angegebenen Merkmale vermieden bzw. zumindest möglichst geringgehalten werden. Im Besonderen kann vorgesehen sein, dass die Steuerungsvorrichtung basierend auf den detektierten Übergängen von einer Futterportion zu Luft unmittelbar nach einer vollständigen Abgabe einer Futterportion zum Einschleusen einer weiteren Futterportion in das Futterleitungssystem ausgebildet ist.

Je nach Ausgestaltung einer Fütterungsanlage ist es alternativ aber durchaus auch möglich, dass die Steuerungsvorrichtung zum jeweils zeitlich versetzten bzw. aufeinanderfolgenden Einschleusen von weiteren Futterportionen in das Futterleitungssystem bereits dann ausgebildet ist, wenn sich eine oder mehrere Futterportionen gleichzeitig noch in dem Futterleitungssystem befinden bzw. darin noch zu Fressstellen befördert werden. Zum Beispiel kann vorgesehen sein, dass die Steuerungsvorrichtung nach Detektion eines Übergangs von einer Futterportion zu Luft an einer bestimmten Messstelle, gegebenenfalls nach Ablauf eines vorgebbaren Reservezeitintervalls, zum Einschleusen einer weiteren Futterportion in das Futterleitungssystem ausgebildet ist, bevor die detektierte Futterportion an der zugehörigen Fressstelle abgegeben ist.

Im Besonderen kann vorgesehen sein, dass die Steuerungsvorrichtung nach einer erfolgten Einschleusung einer Futterportion und nach Ablauf eines vorgebbaren Zeitintervalls zur Beaufschlagung des Futterleitungssystems mit einer neuen für eine weitere Fressstelle vorgesehenen Futterportion ausgebildet ist, und dass die Steuerungsvorrichtung auf Basis eines detektierten Übergangs von einer Futterportion zu Luft zum zeitlich gesteuerten Umschalten eines Verteilungsmittels auf diese weitere Fressstelle ausgebildet ist.

Zum besseren Verständnis der Erfindung wird diese anhand der nachfolgenden Figuren näher erläutert.

Es zeigen jeweils in stark vereinfachter, schematischer Darstellung:
- Fig. 1: ein Ausführungsbeispiel für eine pneumatische Fütterungsanlage 1;
- Fig. 2a: ausschnittsweise einen Zustand eines Teilbereichs einer pneumatischen Fütterungsanlage;
- Fig. 2b: ausschnittsweise einen weiteren Zustand eines Teilbereichs einer pneumatischen Fütterungsanlage.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

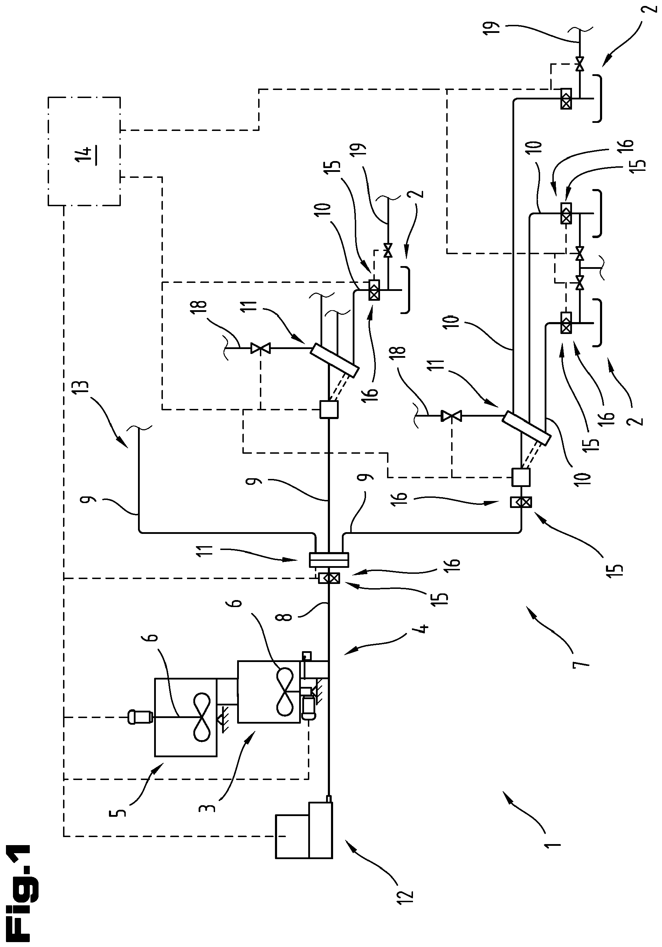

In Fig. 1 ist ein exemplarisches Ausführungsbeispiel für eine gattungsgemäße, pneumatische Fütterungsanlage 1 stark vereinfacht dargestellt. Eine solche pneumatische Fütterungsanlage 1 ist zur Dosierung und Verteilung, insbesondere zur zeitlich aufeinander folgenden Dosierung und Verteilung von Tierfutterportionen vorgesehen bzw. geeignet. Wie aus Fig. 1 ersichtlich kann hierbei eine Vielzahl von Futter- bzw. Fressstellen 2 vorgesehen sein, an welche Fressstellen 2 die Tierfutterportionen jeweils zu verteilen bzw. abzugeben sind.

Eine pneumatische Fütterungsanlage 1 umfasst gemäß Fig. 1 hierzu mindestens einen Misch- und/oder Vorratsbehälter 3 sowie eine Dosiervorrichtung 4 zur Bereitstellung von Futterportionen. Bei dem dargestellten Ausführungsbeispiel ist ein Vorratsbehälter 3 verbunden mit einem separaten Mischbehälter 5 vorgesehen, sodass eine Tierfuttermischung in dem Mischbehälter 5 zubereitet und anschließend dem Vorratsbehälter 3 zugeführt werden kann. Bei dem Ausführungsbeispiel gemäß Fig. 1 sind sowohl der Mischbehälter 5 als auch der Vorratsbehälter 3 mit einem Rührwerk 6 ausgestattet. Alternativ zu dem dargestellten Ausführungsbeispiel wäre es natürlich aber auch möglich lediglich einen Behälter 3 mit Rührwerk 6 vorzusehen, welcher sowohl zur Abmischung als auch Bevorratung einer Tierfuttermischung ausgestaltet ist. Genauso ist eine Variante mit nur einem Vorratsbehälter 3 vorstellbar, welcher lediglich zur Aufnahme einer bereits fertigen Tierfuttermischung vorgesehen ist. Allenfalls kann bei einem Vorratsbehälter 3 auch auf ein Rührwerk 6 verzichtet werden.

Des Weiteren umfasst eine pneumatische Fütterungsanlage 1 ein Futterleitungssystem 7 zum Zuleiten der Futterportionen von der Dosiervorrichtung 4 zu den Fressstellen 2. Zum Portionieren und Übergeben von Tierfutterportionen aus dem Misch- und/oder Vorratsbehälter 3 an bzw. in das Futterleitungssystem 7 kann die Dosiervorrichtung 4 durch jedwede zur Abgabe einer jeweils gewünschten Menge an Tierfutter an das Futterleitungssystem 7 geeignete Vorrichtung gebildet sein, und kann beispielsweise eine entsprechend ansteuerbare Futterschleuse umfassen. So können zum Beispiel Kammerschleusen, Zellenradschleusen aber auch einfache, insbesondere angetriebene Auf/Zu-Klappen als Dosiervorrichtung 4 grundsätzlich eingesetzt werden.

Wie aus Fig. 1 ersichtlich umfasst das Futterleitungssystem 7 eine mit der Dosiervorrichtung 4 verbundene Futterhauptleitung 8. Je nach Stallgröße, Fressstellendistanz und -verteilung sowie anderer Einflussfaktoren können wie in der Fig. 1 dargestellt optional auch weitere mit der Futterhauptleitung 8 verbundene Futterleitungen 9 vorgesehen sein, sodass Tierfutterportionen via ein so verzweigtes Futterleitungssystem 7 in verschiedene, örtlich voneinander beabstandet angeordnete Bereiche der Fütterungsanlage 1 bzw. zum Beispiel eines Tierstalles, gefördert werden können.

Wie anhand des in der Fig. 1 dargestellten Ausführungsbeispiels ersichtlich, umfasst die pneumatische Fütterungsanlage 1 mehrere jeweils in eine der Fressstellen 2 mündende Fressstellenzuleitungen 10. Diese Fressstellenzuleitungen 10 sind hierbei jeweils über zumindest ein Verteilungsmittel 11 mit der Futterhauptleitung 8 oder mit einer der weiteren Futterleitungen 9 verbunden. Ebenso können optional vorhandene Futterleitungen 9 wie in Fig. 1 dargestellt mit der Futterhauptleitung 8 über zumindest ein Verteilungsmittel 11 verbunden sein.

Als Verteilungsmittel 11 können grundsätzlich jedwede Vorrichtungen, mittels welchen ein Umschalten auf die einzelnen Futter- bzw. Fressstellenzuleitungen bewerkstelligt werden kann, verwendet werden, wie etwa Auf/Zu-Ventile verschiedenster Art. Sogenannte Rotationsverteiler haben sich in der Praxis für eine pneumatische Fütterungsanlage 1 als besonders geeignet erwiesen. Im Prinzip können bei einer pneumatischen Fütterungsanlage 1 natürlich auch mehrere, unterschiedlich ausgestaltete Verteilungsmittel 11 eingesetzt bzw. vorgesehen werden.

Eine pneumatische Fütterungsanlage 1 umfasst wie in Fig. 1 dargestellt eine mit der Futterhauptleitung 8 verbundene Drucklufterzeugungsvorrichtung 12 zur pneumatischen Förderung der Futterportionen via das Futterleitungssystem 7 zu den Fressstellen 2. Eine solche Drucklufterzeugungsvorrichtung 12 kann beispielsweise durch einen Kompressor oder ein Gebläse gebildet sein.

Die in Fig. 1 beispielhaft dargestellte, pneumatische Fütterungsanlage 1 ist natürlich nur als ein mögliches Ausführungsbeispiel für eine pneumatische Fütterungsanlage 1 anzusehen. Selbstverständlich sind auch andere Ausführungsformen einer pneumatischen Fütterungsanlage 1 als in Fig. 1 dargestellt möglich, zum Beispiel kann die Anzahl und Anordnung der Fressstellen 2 und daher auch die Ausgestaltung des Futterleitungssystems 7 je nach den jeweiligen Anforderungen variieren und von dem in der Fig. 1 dargestellten Ausführungsbeispiel abweichen. Beispielsweise kann bei vergleichsweise kleinen Tierställen auf ein Vorsehen von mit der Futterhauptleitung 8 verbundenen, weiteren Futterleitungen 9 gegebenenfalls verzichtet werden.

Des Weiteren kann eine pneumatische Fütterungsanlage 1 natürlich auch wie an sich bekannt zusätzlich zu den Fressstellenzuleitungen 10 anderweitige Zuleitungen 13 zu diversen Anlagenkomponenten umfassen, beispielsweise Zuleitungen zu Auffangbehältern für Futtermittelreste oder Wasserreste, welche zum Beispiel nach Abschluss einer Tierfütterung durch Ausblasen oder Spülen des Futterleitungssystems 7 bzw. dessen Futterhauptleitung 8 und gegebenenfalls Futterleitungen 9 in solche Auffangbehälter geleitet bzw. abgegeben werden können. Der Einfachheit und besseren Übersicht halber sind solche weiteren Anlagenkomponenten einer pneumatischen Fütterungsanlage 1 in den Figuren nicht dargestellt.

Gemäß dem Ausführungsbeispiel in Fig. 1 umfasst eine pneumatische Fütterungsanlage 1 zur Steuerung der Dosierung und Förderung der Futterportionen zu den Fressstellen 2 ausgebildete Steuerungsvorrichtung 14. Hierzu sind wie anhand der strichlierten Linien in Fig. 1 ersichtlich zumindest die Dosiervorrichtung 4 und Drucklufterzeugungsvorrichtung 12, sowie die Verteilungsmittel 11 mit dieser Steuerungsvorrichtung 14 signalverbunden. Selbstverständlich kann die Steuerungsvorrichtung 14 auch zur Steuerung weiterer Anlagenkomponenten ausgebildet und mit solchen weiteren Anlagenkomponenten signalverbunden sein, wie dies nachfolgend erläutert wird.

Im Besonderen ist bei der pneumatischen Fütterungsanlage 1 wenigstens ein mit der Steuerungsvorrichtung 14 signalverbundener Sensor 15 an wenigstens einer Messtelle 16 im Zuge des Futterleitungssystems 7 angeordnet, wobei auch mehrere Sensoren 15 vorgesehen sein können, wie anhand Fig. 1 dargestellt ist.

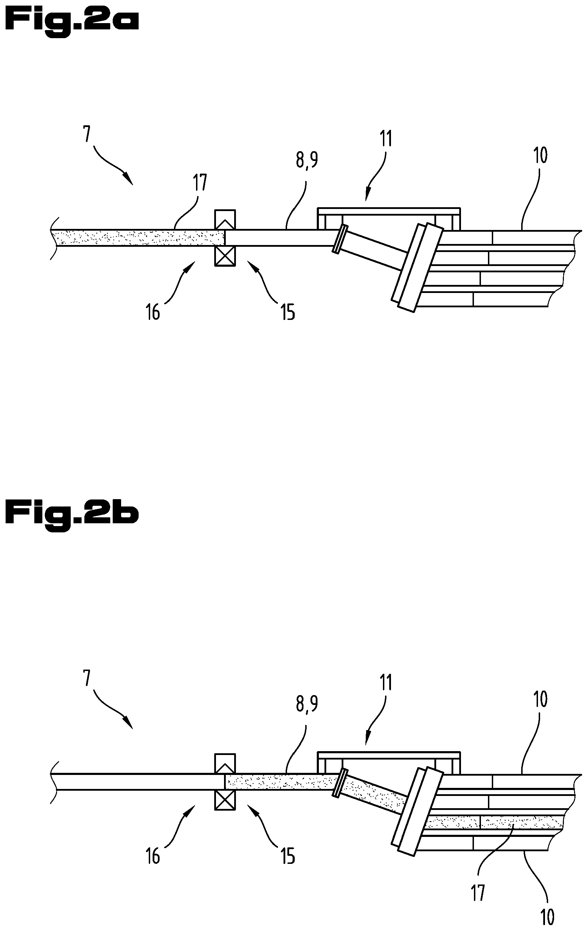

Jedenfalls ist dieser wenigstens eine Sensor 15 messtechnisch zur Detektion von Übergängen von Luft zu einer jeweiligen Futterportion 17 und/oder Übergängen von einer jeweiligen Futterportion 17 zu Luft an der wenigstens einen Messtelle 16 in dem Futterleitungssystem 7 ausgebildet. Dies ist zur besseren Ersichtlichkeit in den Fig. 2a und 2b veranschaulicht, welche lediglich ausschnittsweise einen Teil eines Futterleitungssystems 7 im Bereich eines Verteilungsmittels 15 zeigen. In Fig. 2a und 2b werden für gleiche Bauteile gleiche Bezugszeichen verwendet wie in der vorangegangen Fig. 1. Weitere Ausführungsbeispiele einer pneumatischen Fütterungsanlage 1 bzw. eines Verfahrens zur Tierfütterung mittels einer solchen pneumatischen Tierfütterungsanlage 1 werden im Folgenden auch anhand der Fig. 2a und 2b näher erläutert.

Im Betrieb der pneumatischen Fütterungsanlage 1 umfasst das Verfahren zur Fütterung von Tieren die Schritte
- Zuführung, insbesondere zeitlich aufeinanderfolgende Zuführung von Futterportionen 17 aus mindestens einem Misch- und/oder Vorratsbehälter 3 in eine Futterhauptleitung 8 eines Futterleitungssystem 7 mittels einer Dosiervorrichtung 4,
- pneumatische Förderung der Futterportionen 17 in dem Futterleitungssystem 7 zu Fressstellen 2 durch mittels einer Drucklufterzeugungsvorrichtung 12 erzeugte Druckluft, wobei die einzelnen Futterportionen 17 mittels zumindest einem Verteilungsmittel 11 jeweils in Fressstellenzuleitungen 10 geleitet werden, welches zumindest eine Verteilungsmittel 11 mit der Futterhauptleitung 8 oder mit einer optionalen, weiteren mit der Futterhauptleitung 8 verbundenen Futterleitung 9, verbunden ist, und wobei die Fressstellenzuleitungen 10 jeweils in eine Futter- bzw. Fressstelle 2 münden und die Futterportionen 17 an eine jeweilige Fressstelle 2 abgegeben werden,
- sowie Steuerung der Dosierung und Förderung der Futterportionen 17 zu den Fressstellen 2 mittels einer Steuerungsvorrichtung 14.

Bei dem Verfahren werden wie anhand der Fig. 1, 2a und 2b erkennbar an wenigstens einer Messstelle 16 im Zuge des Futterleitungssystems 7 mittels wenigstens eines mit der Steuerungsvorrichtung 14 signalverbundenen Sensors 15 Übergänge von Luft zu einer jeweiligen Futterportion 17 und/oder Übergänge von einer jeweiligen Futterportion 17 zu Luft an der wenigstens einen Messtelle 16 in dem Futterleitungssystem 7 detektiert.

Bei einer pneumatischen Fütterungsanlag 1 kann der wenigstens eine Sensor 15 zur Detektion der Übergänge von Luft zu einer Futterportion 17 bzw. von einer Futterportion 17 zu Luft im Grunde genommen an einer beliebigen Messstelle 16 im Zuge bzw. entlang des Futterleitungssystems 7 angeordnet sein. Grundsätzlich kann ein einzelner im Zuge der Futterhauptleitung 8 angeordneter Sensor 15 ausreichend sein. Dies da eine Berechnung der (Rest-)Laufzeit einer Futterportion 17 in dem Futterleitungssystem 7, zum Beispiel bis zur vollständigen Abgabe an eine Fressstelle 2, auf Basis eines detektierten Übergangs mittels weiterer bekannter Parameter, wie den bekannten Leitungsquerschnitten des Futterleitungssystems 7 und den bekannten Luftdrücken im Futterleitungssystem 7, mit hinreichender Genauigkeit erfolgen kann. Durch die mittels des wenigstens einen Sensors 15 detektierten Übergänge sind jeweils ausreichend genaue Bezugspunkte für solche Berechnungen bereitgestellt. Entsprechende Berechnungsalgorithmen können hierbei zur automatischen Steuerung der pneumatischen Fütterungsanlage 1 in der Steuerungsvorrichtung 14 abgebildet sein.

Wie anhand der in den Fig. 1, vor allem aber auch 2a und 2b gezeigten Ausführungsbeispiele einer pneumatischen Fütterungsanlage 1 dargestellt ist, kann der wenigstens eine Sensor 15 vorzugsweise an wenigstens einer Messstelle 16 im Zuge der Futterhauptleitung 8 oder einer Futterleitung 9 vor dem zumindest einen Verteilungsmittel 11 angeordnet sein.

Alternativ und/oder zusätzlich können aber auch mehrere Sensoren 15 an mehreren Messstellen 16 im Zuge mehrerer Fressstellenzuleitungen 10 vor mehreren Fressstellen 2 angeordnet sein, wie dies anhand Fig. 1 schematisch dargestellt ist.

Selbstverständlich wäre bei dem in Fig. 1 dargestellten Ausführungsbeispiel aber auch ein Vorsehen mehrerer Sensoren 15 an jeweils einer vor jedem der gezeigten Verteilungsmittel 11 angeordneten Messstelle 16 möglich. Ein Anordnen mehrerer Sensoren 15 kann vor allem bei großen, weitläufigen pneumatischen Fütterungsanlagen 1 sinnvoll sein.

Unabhängig davon kann der wenigstens eine Sensor 15 bevorzugt durch eine optische Erfassungsvorrichtung, besonders vorzugsweise durch eine Lichtschrankensensorvorrichtung gebildet sein. Grundsätzlich sind aber auch andere Typen von Sensoren, zum Beispiel elektromechanische Sensoren, denkbar.

Im Betrieb einer Fütterungsanlage 1 können mittels wenigstens eines an wenigstens einer Messstelle 16 im Zuge der Futterhauptleitung 8 oder einer Futterleitung 9 vor dem zumindest einen Verteilungsmittel 11 angeordneten Sensors 15 die Übergänge von Luft zu einer jeweiligen Futterportion 17, wie in Fig. 2a am besten ersichtlich, und/oder die Übergänge von einer jeweiligen Futterportion 17 zu Luft, wie am besten anhand der Fig. 2b ersichtlich, detektiert werden.

Bei einem Verfahren zur Tierfütterung können die Übergänge von Luft zu einer jeweiligen Futterportion 17 und/oder die Übergänge von einer jeweiligen Futterportion 17 zu Luft aber auch mittels mehrerer an mehreren Messstellen 16 im Zuge mehrerer Fressstellenzuleitungen 10 vor mehreren Fressstellen 2 angeordneten Sensoren 15 detektiert werden, wie dies in der Fig. 1 dargestellt ist. Dies entweder alternativ oder zusätzlich zu einer Detektion der Übergänge an einer oder mehrerer Messstellen 16 im Zuge der Futterhauptleitung 8 bzw. Futterleitung 9.

Durch die bzw. auf Basis der Detektion der Übergänge von Luft zu einer Futterportion 17 und/oder von einer Futterportion 17 zu Luft können mittels der Steuerungsvorrichtung 14 im Speziellen auch weitere Vorgänge bei dem Verfahren bzw. bei der pneumatischen Fütterungsanlage 1 verbessert gesteuert werden.

Wie in Fig. 1 dargestellt kann zum Beispiel im Zuge des Futterleitungssystems 7 mindestens eine Wasserzugabe-Vorrichtung 18 zum Beimengen von Wasser zu einer Futterportion 17 angeordnet sein. Dies um etwa eine verbesserte Nahrungsaufnahme für die zu fütternden Tiere bereitstellen zu können. Die Steuerungsvorrichtung 14 kann in weiterer Folge auf Basis eines detektierten Übergangs von Luft zu einer Futterportion 17, wie dies in der Fig. 2a veranschaulicht ist, zur zeitlich gesteuerten Zugabe von Wasser zu dieser Futterportion 17 mittels der mindestens einen Wasserzugabe-Vorrichtung 18 ausgebildet sein.

In weiterer Folge kann die Steuerungsvorrichtung 14 auf Basis eines detektierten Übergangs von der Futterportion 17 zu Luft, siehe Fig. 2b, zum zeitlich gesteuerten Stoppen der Zugabe von Wasser zu dieser Futterportion 17 ausgebildet sein.

Grundsätzlich kann eine Wasserzugabe-Vorrichtung 18 an jedweder Stelle im Zuge des Futterleitungssystems 7 angeordnet sein, beispielsweise kann eine Wasserzugabe-Vorrichtung 18 im Zuge der Futterhauptleitung 8 oder im Zuge von Futterleitungen 9 vor einem Verteilungsmittel 11 und/oder im Zuge von Fressstellenzuleitungen 10 angeordnet sein. Eine Wasserzugabe-Vorrichtung 18 kann zum Beispiel durch eine Frischwasserzuleitung mit einem ansteuerbaren Auf/Zu-Ventil wie in Fig. 1 angedeutet, oder mit einer ansteuerbaren Pumpe gebildet sein. Genauso ist eine Zuleitung von Wasser aus einem Wasserreservoir mit ansteuerbarem Ventil oder ansteuerbarer Pumpe möglich. Besonders günstig kann in Zusammenhang mit der Anfeuchtung von Tierfutterportionen 17 wie in der Fig. 1 auch dargestellt eine Anordnung einer Wasserzugabe-Vorrichtung 18 vor einem Verteilungsmittel 11 sein, da hierdurch allen Futterportionen 17, welche über dieses Verteilungsmittel 11 angesteuert bzw. erreicht werden können, Wasser zugegeben werden kann.

Im Betrieb der pneumatischen Tierfütterungsanlage 1 kann auf Basis eines detektierten Übergangs von Luft zu einer Futterportion 17 dieser Futterportion 17 zeitlich gesteuert insbesondere durch die Steuerungsvorrichtung 14 mittels einer Wasserzugabe-Vorrichtung 18 Wasser beigemengt werden.

In weiterer Folge kann dann auch auf Basis eines detektierten Übergangs von der Futterportion 17 zu Luft die Zugabe von Wasser zu dieser Futterportion 17 zeitlich gesteuert gestoppt werden.

Des Weiteren kann die Steuerungsvorrichtung 14 auf Basis eines detektierten Übergangs von einer Futterportion 17 zu Luft, siehe Fig. 2b, zur zeitlich gesteuerten Reinigung von Fressstellenzuleitungen 10 ausgebildet sein.

Hierzu können bei einer pneumatischen Fütterungsanlage 1 im Bereich von Fressstellenzuleitungen 10 Ablaufreinigungsvorrichtungen 19 vorgesehen bzw. angeordnet sein, mittels welcher Ablaufreinigungsvorrichtungen 19 eine Reinigung der Fressstellenzuleitungen 10 vorgenommen werden kann, wie dies in der Fig. 1 grob schematisch veranschaulicht ist.

Analog zu Wasserzugabe-Vorrichtungen 18 kann auch eine Ablaufreinigungsvorrichtung 19 durch eine Frischwasserzuleitung oder eine Zuleitung aus einem Wasserreservoir mit einem ansteuerbaren Auf/Zu-Ventil, wie in Fig. 1 angedeutet, oder mit einer ansteuerbaren Pumpe gebildet sein. Es kann aber zum Beispiel auch eine Wasser- oder Luft-Hochdruckreinigungsvorrichtung vorgesehen sein. Grundsätzlich kann zur Reinigung von Abläufen der Fressstellenzuleitungen 10 sowie des gesamten Futterleitungssystems 7 auch die ohnehin vorgesehene Drucklufterzeugungsvorrichtung 12 herangezogen werden. Zusätzlich und/oder alternativ ist es auch möglich, dass eine Reinigung von Fressstellenzuleitungen 10 oder aber auch zumindest generell Teilbereichen des Futterleitungssystems 7 zeitlich gesteuert und basierend auf detektierten Übergängen von einer Futterportion 17 zu Luft mittels für die Zugabe von Wasser zu Futterportionen vorgesehenen Wasserzugabe-Vorrichtungen 18 durchgeführt wird. Hierzu kann die Steuerungsvorrichtung 14 auf Basis von detektierten Übergängen von Futterportionen 17 zu Luft zur zeitlich gesteuerten Reinigung von Teilbereichen des Futterleitungssystems 7, insbesondere von Fressstellenzuleitungen 10 mittels einer Wasserzugabe-Vorrichtung 18 ausgebildet sein.

Im Betrieb der pneumatischen Fütterungsanlage 1 kann auf Basis eines detektierten Übergangs von einer Futterportion 17 zu Luft, wie in Fig. 2b veranschaulicht, Fressstellenzuleitungen 10 zeitlich gesteuert gereinigt werden. Dies zum Beispiel mittels im Bereich der Fressstellenzuleitungen 10 angeordneten Ablaufreinigungsvorrichtungen 19. Alternativ kann eine Reinigung zumindest von Teilabschnitten eines Futterleitungssystems 7 wie bereits beschrieben nach einem detektierten Übergang von einer Futterportion 17 zu Luft beispielsweise aber auch mittels einer Wasserzugabe-Vorrichtung 18 durchgeführt werden.

Des Weiteren kann die Steuerungsvorrichtung 14 auf Basis eines detektierten Übergangs von der Futterportion 17 zu Luft zur zeitlich gesteuerten, insbesondere zeitlich versetzten Beaufschlagung des Futterleitungssystems 7 mit einer neuen für eine weitere Fressstelle 2 vorgesehenen Futterportion 17 ausgebildet sein.

Im Betrieb der Fütterungsanlage 1 kann auf Basis eines detektierten Übergangs von der Futterportion 17 zu Luft zeitlich gesteuert, insbesondere zeitlich versetzt das Futterleitungssystems 7 mit einer neuen für eine weitere Fressstelle 2 vorgesehenen Futterportion 17 beaufschlagt werden.

Im Speziellen kann vorgesehen sein, dass mittels der Steuerungsvorrichtung 14 basierend auf den Übergängen von einer Futterportion 17 zu Luft unmittelbar nach einer vollständigen Abgabe einer Futterportion 17 eine weitere Futterportion 17 in das Futterleitungssystem 7 eingeschleust wird bzw. dass die Steuerungsvorrichtung 14 hierzu ausgebildet ist.

Je nach Ausgestaltung einer Fütterungsanlage 1 kann die Steuerungsvorrichtung 14 zum jeweils zeitlich versetzt aufeinanderfolgenden Einschleusen von weiteren Futterportionen 17 in das Futterleitungssystem 7 aber auch bereits dann ausgebildet sein, wenn sich gleichzeitig eine oder mehrere andere Futterportionen 17 noch in dem Futterleitungssystem 7 befinden bzw. darin noch zu Fressstellen 2 befördert werden. Zum Beispiel kann vorgesehen sein, dass nach Detektion eines Übergangs von einer Futterportion 17 zu Luft an einer bestimmten Messstelle 16, gegebenenfalls nach Ablauf eines vorgebbaren Reservezeitintervalls, eine weitere Futterportion 17 in das Futterleitungssystem 7 eingeschleust wird, bevor die detektierte Futterportion 7 an einer Fressstelle 2 abgegeben ist. Beispielsweise kann nach einem detektierten Übergang von einer Futterportion 17 zu Luft ein Verteilungsmittel 11, gegebenenfalls nach Ablauf eines Reservezeitintervalls bereits vor Abgabe der detektierten Futterportion 17 an die vorgesehene Fressstelle 2 auf eine neue Fressstelle 2 für eine weitere Futterportion 17 umgeschaltet werden, und dann auch umgehend diese weitere Futterportion 17 in das Futterleitungssystem 7 eingeschleust werden. Eine solche Vorgangsweise mit mehreren Futterportionen 17 in dem Futterleitungssystem 7 ist zum Beispiel ohne weiteres im Falle kurzer Fressstellenzuleitungen 10 möglich, wenn hier der noch vorhandene Restdruck zur vollständigen Abgabe einer Futterportion 17 an eine Fressstelle 2 ausreicht. Auch ein Futterleitungssystem 7 mit Gefälle von Fressstellenzuleitungen 10 bzw. allfälligen Futterleitungen 9 begünstigt eine Förderung mehrerer Futterportionen 17 gleichzeitig in dem Futterleitungssystem 7, da eine vollständige Abgabe an eine Fressstelle 2 natürlich auch schwerkraftbedingt bzw. schwerkraftunterstützt erfolgen kann.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

1 Fütterungsanlage
2 Fressstelle
3 Vorratsbehälter
4 Dosiervorrichtung
5 Mischbehälter
6 Rührwerk
7 Futterleitungssystem
8 Futterhauptleitung
9 Futterleitung
10 Fressstellenzuleitung
11 Verteilungsmittel
12 Drucklufterzeugungsvorrichtung
13 Zuleitung
14 Steuerungsvorrichtung
15 Sensor
16 Messtelle
17 Futterportion
18 Wasserzugabe-Vorrichtung
19 Ablaufreinigungsvorrichtungen

## Patentansprüche

1. Verfahren zur Fütterung von Tieren mittels einer pneumatischen Fütterungsanlage (1), umfassend die Schritte
- Zuführung von Futterportionen (17) aus mindestens einem Misch- und/oder Vorratsbehälter (3) in eine Futterhauptleitung (8) eines Futterleitungssystem (7) mittels einer Dosiervorrichtung (4),
- pneumatische Förderung der Futterportionen (17) in dem Futterleitungssystem (7) zu Fressstellen (2) durch mittels einer Drucklufterzeugungsvorrichtung (12) erzeugte Druckluft, wobei die einzelnen Futterportionen (17) mittels zumindest einem Verteilungsmittel (11) jeweils in Fressstellenzuleitungen (10) geleitet werden, welches zumindest eine Verteilungsmittel (11) mit der Futterhauptleitung (8) oder mit einer optionalen, weiteren mit der Futterhauptleitung (8) verbundenen Futterleitung (9), verbunden ist, und wobei die Fressstellenzuleitungen (10) jeweils in eine Fressstelle (2) münden und die Futterportionen (17) an eine jeweilige Fressstelle (2) abgegeben werden,
- Steuerung der Dosierung und Förderung der Futterportionen (17) zu den Fressstellen (2) mittels einer Steuerungsvorrichtung (14),
**dadurch gekennzeichnet, dass**
an wenigstens einer Messstelle (16) im Zuge des Futterleitungssystems (7) mittels wenigstens eines mit der Steuerungsvorrichtung (14) signalverbundenen Sensors (15) Übergänge von Luft zu einer jeweiligen Futterportion (17) und/oder Übergänge von einer jeweiligen Futterportion (17) zu Luft an der wenigstens einen Messtelle (16) in dem Futterleitungssystem (7) detektiert werden.

2. Verfahren nach Anspruch 1, **dadurch gekennzeichnet, dass** die Übergänge von Luft zu einer jeweiligen Futterportion (17) und/oder die Übergänge von einer jeweiligen Futterportion (17) zu Luft mittels wenigstens eines an wenigstens einer Messstelle (16) im Zuge der Futterhauptleitung (8) oder einer Futterleitung (9) vor dem zumindest einen Verteilungsmittel (11) angeordneten Sensors (15) detektiert wird.

3. Verfahren nach Anspruch 1 oder 2, **dadurch gekennzeichnet, dass** die Übergänge von Luft zu einer jeweiligen Futterportion (17) und/oder die Übergänge von einer jeweiligen Futterportion (17) zu Luft mittels mehrerer an mehreren Messstellen (16) im Zuge mehrerer Fressstellenzuleitungen (10) vor mehreren Fressstellen (2) angeordneten Sensoren (15) detektiert werden.

4. Verfahren nach einem der vorhergehenden Ansprüche, **dadurch gekennzeichnet, dass** auf Basis eines detektierten Übergangs von Luft zu einer Futterportion (17) dieser Futterportion (17) zeitlich gesteuert mittels einer Wasserzugabe-Vorrichtung (18) Wasser beigemengt wird.

5. Verfahren nach Anspruch 4, **dadurch gekennzeichnet, dass** auf Basis eines detektierten Übergangs von der Futterportion (17) zu Luft die Zugabe von Wasser zu dieser Futterportion (17) zeitlich gesteuert gestoppt wird.

6. Verfahren nach einem der vorhergehenden Ansprüche, **dadurch gekennzeichnet, dass** auf Basis eines detektierten Übergangs von einer Futterportion (17) zu Luft Fressstellenzuleitungen (10) zeitlich gesteuert gereinigt werden.

7. Verfahren nach einem der vorhergehenden Ansprüche, **dadurch gekennzeichnet, dass** auf Basis eines detektierten Übergangs von der Futterportion (17) zu Luft zeitlich gesteuert das Futterleitungssystems (7) mit einer neuen für eine weitere Fressstelle (2) vorgesehenen Futterportion (17) beaufschlagt wird.

8. Pneumatische Fütterungsanlage (1) zur Dosierung und Verteilung von Tierfutterportionen (17) an mehrere Fressstellen (2), insbesondere zur Ausführung eines Verfahrens gemäß einem der Ansprüche 1 bis 7, umfassend
- mindestens einen Misch- und/oder Vorratsbehälter (3) und eine Dosiervorrichtung (4) zur Bereitstellung von Futterportionen (17),
- ein Futterleitungssystem (7) zum Zuleiten der Futterportionen (17) von der Dosiervorrichtung (4) zu den Fressstellen (2), welches Futterleitungssystem (7) eine mit der Dosiervorrichtung (4) verbundene Futterhauptleitung (8) und optional weitere mit der Futterhauptleitung (8) verbundene Futterleitungen (9) umfasst, und welches Futterleitungssystem (7) mehrere über zumindest ein Verteilungsmittel (11) mit der Futterhauptleitung (8) oder mit einer der weiteren Futterleitungen (9) verbundene und jeweils in eine der Fressstellen (2) mündende Fressstellenzuleitungen (10) umfasst,
- eine mit der Futterhauptleitung (8) verbundene Drucklufterzeugungsvorrichtung (12) zur pneumatischen Förderung der Futterportionen (17) via das Futterleitungssystem (7) zu den Fressstellen (2),
- eine zur Steuerung der Dosierung und Förderung der Futterportionen (17) zu den Fressstellen (2) ausgebildete Steuerungsvorrichtung (14),
**dadurch gekennzeichnet, dass**
wenigstens ein mit der Steuerungsvorrichtung (14) signalverbundener Sensor (15) an wenigstens einer Messtelle (16) im Zuge des Futterleitungssystems (7) angeordnet ist, welcher wenigstens eine Sensor (15) messtechnisch zur Detektion von Übergängen von Luft zu einer jeweiligen Futterportion (17) und/oder Übergängen von einer jeweiligen Futterportion (17) zu Luft an der wenigstens einen Messtelle (16) in dem Futterleitungssystem (7) ausgebildet ist.

9. Fütterungsanlage (1) nach Anspruch 8, **dadurch gekennzeichnet, dass** der wenigstens eine Sensor (15) an wenigstens einer Messstelle (16) im Zuge der Futterhauptleitung (8) oder einer Futterleitung (9) vor dem zumindest einen Verteilungsmittel (11) angeordnet ist.

10. Fütterungsanlage (1) nach Anspruch 8 oder 9, **dadurch gekennzeichnet, dass** mehrere Sensoren (15) an mehreren Messstellen (16) im Zuge mehrerer Fressstellenzuleitungen (10) vor mehreren Fressstellen (2) angeordnet sind.

11. Fütterungsanlage (1) nach einem der Ansprüche 8 bis 10, **dadurch gekennzeichnet, dass** der wenigstens eine Sensor (15) durch eine Lichtschrankensensorvorrichtung gebildet ist.

12. Fütterungsanlage (1) nach einem der Ansprüche 8 bis 11, **dadurch gekennzeichnet, dass** im Zuge des Futterleitungssystems (7) mindestens eine Wasserzugabe-Vorrichtung (18) angeordnet ist, und dass die Steuerungsvorrichtung (14) auf Basis eines detektierten Übergangs von Luft zu einer Futterportion (17) zur zeitlich gesteuerten Zugabe von Wasser zu dieser Futterportion (17) mittels der mindestens einen Wasserzugabe-Vorrichtung (18) ausgebildet ist.

13. Fütterungsanlage (1) nach Anspruch 12, **dadurch gekennzeichnet, dass** die Steuerungsvorrichtung (14) auf Basis eines detektierten Übergangs von der Futterportion (17) zu Luft zum zeitlich gesteuerten Stoppen der Zugabe von Wasser zu dieser Futterportion (17) ausgebildet ist.

14. Fütterungsanlage (1) nach einem der Ansprüche 8 bis 13, **dadurch gekennzeichnet, dass** die Steuerungsvorrichtung (14) auf Basis eines detektierten Übergangs von einer Futterportion (17) zu Luft zur zeitlich gesteuerten Reinigung von Fressstellenzuleitungen (10) ausgebildet ist.

15. Fütterungsanlage (1) nach einem der Ansprüche 8 bis 14, **dadurch gekennzeichnet, dass** die Steuerungsvorrichtung (14) auf Basis eines detektierten Übergangs von der Futterportion (17) zu Luft zur zeitlich gesteuerten Beaufschlagung des Futterleitungssystems (7) mit einer neuen für eine weitere Fressstelle (2) vorgesehenen Futterportion (17) ausgebildet ist.
